(19)

Europäisches
Patentamt
European
Patent Office
Office européen
des brevets

(11) **EP 2 455 353 A1**

(12) **EUROPEAN PATENT APPLICATION**

(43) Date of publication:
**23.05.2012 Bulletin 2012/21**

(51) Int Cl.:
*C04B 33/24* (2006.01)  *B32B 18/00* (2006.01)

(21) Application number: **10290617.9**

(22) Date of filing: **19.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Imerys Services**
**75007 Paris (FR)**

(72) Inventor: **The designation of the inventor has not yet been filed**

(74) Representative: **Rushton, David John**
**Haseltine Lake LLP**
**Redcliff Quay**
**120 Redcliff Street**
**Bristol BS1 6HU (GB)**

(54) **Multilayer ceramic structures**

(57) The present invention describes multilayer ceramic structures and multilayer ceramic-forming structures, methods for producing them and uses thereof.

EP 2 455 353 A1

**Description**

**Field of the Invention**

This invention relates to multilayer ceramic and multilayer ceramic-forming structures, and methods for making said structures. This invention also relates to the use of the multilayer ceramic structures in various applications including in tableware and sanitary ware and for example as tiles.

**Background of the Invention**

Ceramic articles are used in numerous applications. Ceramic articles, e.g. for use as tiles, tableware or sanitary ware in the home or in industry, are generally formed from a wet high solids composition which comprises a blend of various particulate ingredients which typically include kaolinitic clays. Fluxing materials such as china stone, feldspar or nepheline syenite and at least one silica containing material such as quartz or flint are also typically included in such compositions. The proportions of the various ingredients used in the composition vary according to the properties required in the ceramic article which is formed by the action of heat on a ceramic-forming composition during a firing process.

In order to perform satisfactorily in a shaping process, it is necessary for the ceramic-forming composition to have sufficient plasticity to enable it to flow and deform under the action of compressive, tensile and shear stresses. The shaped composition must also possess sufficient strength in its unfired or "green state", to permit a certain amount of handling without loss of its integrity and shape. Subsequent to the shaping process, the shaped body produced in its green state may be dried before firing in a kiln to produce a ceramic article of the type desired. Glazes and decoration may also be applied at this stage.

Many different types of ceramic ware may be produced, such as fine earthenware, semi-vitreous china, porcelain, bone china and stoneware. Whiteware ceramic products include stoneware, earthenware, porcelain and china. Traditionally, whiteware ceramics are made of a mixture of clay minerals, feldspars (e.g. sodium and/or potassium feldspars) and quartz. Additionally, minor components may be present, such as calcium carbonate, magnesium carbonate, calcium-magnesium carbonate, nepheline syenite and calcium phosphate. During firing, these materials react to form a liquid phase that is responsible for the densification of the material. Simultaneously, the crystalline phase mullite is formed which is considered to act as a support. The final microstructure typically comprises needle-like mullite crystals embedded in a silicate vitreous matrix. Quartz particles which are not completely dissolved may remain.

There are a number of challenges facing the production and subsequent use of thin ceramic structures, such as tiles. These challenges concern aspects of the processing and the low mechanical strength of the resulting thin bodies produced. The difficulties faced extend to the formation of thin green bodies with satisfactory green strength. It is difficult to produce homogeneous compositions which are sufficiently free of defects to the extent that the final mechanical properties of the ceramic article are not significantly compromised, particularly when the articles formed are very thin. There are further challenges associated with the processing during the firing process. During the firing process, the material should form a liquid phase with a viscosity low enough to facilitate densification and to allow almost complete elimination of the open porosity while at the same time retaining its form as far as possible. Numerous attempts have been made to address these issues with mixed success. There remains an on-going need to provide ceramic structures, particularly thin ceramic structures, with improved mechanical properties such as improved flexural (or bending) strength. An object of the present invention is to provide ceramic structures and ceramic-forming structures (including green shaped articles), particularly thin structures, with improved mechanical properties such as improved flexural (or bending) strength.

**Summary of the Invention**

The present invention is based on the finding that ceramic articles possessing improved mechanical properties may be obtained by providing multilayer ceramic structures comprising at least, or consisting of, three layers. The three layers comprise, or consist of, a ceramic layer sandwiched between two outer ceramic layers wherein the two outer ceramic layers possess a lower thermal expansion coefficient (TEC) than the sandwiched middle layer. The middle (or inner) layer possesses a higher thermal expansion coefficient than each of the two outer layers. Advantageously, the thermal expansion coefficient of the two outer layers is the same. This arrangement provides a structure which possesses better mechanical properties when compared to each layer individually. Advantageously, the layers may be ceramic whiteware layers. Ceramic whiteware is formed from natural raw materials wherein the major component is clay or feldspar. Suitable examples of whiteware are porcelain, stoneware, china and earthenware. The layers may therefore be selected from porcelain, china, stoneware and earthenware. Porcelain, china and stoneware consist essentially of a mixture of clay mineral(s), feldspar(s) and quartz. Earthenware consists essentially of clay minerals. Earthenware may also comprise one or more feldspars and/or feldspathic mineral or minerals. One or more calcium carbonate minerals may also be present in the earthenware.

Accordingly, in an aspect of the present invention, there is provided a multilayer ceramic structure, wherein the structure comprises at least, or consists of three layers, wherein said three layers comprise or consist of a middle layer sandwiched between two outer layers and said middle layer has a thermal expansion coefficient which is higher than each of the two outer layers.

The layers may be ceramic whiteware layers. The layers may be selected independently of each other from porcelain, china, stoneware and earthenware. Each of the layers may be selected from the same type of ceramic. For example, each of the layers may be porcelain, china, stoneware or earthenware.

Accordingly, in an aspect of the present invention, there is provided a multilayer ceramic structure, wherein the structure comprises at least, or consists of, three layers, wherein said three layers comprise, or consist of, a middle layer sandwiched between two outer layers and said middle layer has a thermal expansion coefficient which is higher than each of the two outer layers, wherein the layers are ceramic whiteware layers. There is also provided a multilayer ceramic structure, wherein the structure comprises at least, or consists of, three layers, wherein said three layers comprise, or consist of, a middle layer sandwiched between two outer layers and said middle layer has a thermal expansion coefficient which is higher than each of the two outer layers, wherein the layers are porcelain ceramic layers or china ceramic layers or stoneware ceramic layers or earthenware ceramic layers.

The multilayer ceramic structure is formable from or formed from a multilayer ceramic-forming structure. In a further aspect, there is provided a multilayer ceramic-forming structure for making the multilayer ceramic structure according to the various aspects of the invention. This multilayer ceramic-forming structure may be referred to herein as a multilayer green structure. The layers making up the multilayer ceramic-forming structure may be referred to herein as precursor layers.

The multilayer ceramic-forming structure may also be referred to herein as a multilayer ceramic-forming paper structure. For example, the multilayer ceramic-forming structure may be in the form of a paper-like sheet material which contains amounts of organic and/or inorganic fibres. The organic fibrous material may be a combustible material. Therefore, optionally, the multilayer ceramic-forming composition may comprise combustible material. The combustible material may comprise fibrous material, for example organic fibres. Examples of suitable fibres include cellulose containing fibres, for example wood pulp. During firing of the multilayer ceramic-forming paper structure, the organic fibres are burned out and are no longer present in the final multilayer ceramic structure. The multilayer ceramic-forming paper structures may be used to provide a range of shapes after firing.

According to a further aspect, the present invention provides a method for making a multilayer ceramic-forming structure comprising:

sandwiching a ceramic-forming layer between two ceramic-forming layers to form a three layer structure comprising or consisting of inner and outer ceramic-forming layers;

applying pressure to said three layer structure;

wherein if fired to form a multilayer ceramic structure, the inner layer would have a thermal expansion coefficient which is higher than each of the two outer layers.

The multilayer ceramic-forming structure may be fired to form a multilayer ceramic structure. Prior to firing, the multilayer ceramic-forming structure may be dried and/or shaped.

The types of structure or article that may be made include: tiles, for example floor tiles and wall tiles; tableware; sanitary ware; artware; artificial slates and other ceramic products such as technical ceramics, for example electrical insulators; chemical resistant ceramics and thermal shock resistant ceramics.

The multilayer ceramic structures produced in accordance with the present invention may typically comprise an amount of vitreous phase. The multilayer ceramic structure may also possess a low water absorption. For example, the water absorption of the multilayer ceramic structure may be 3% or less. The present invention affords extremely high strength ceramic bodies with very low bulk density and very low open porosity. For example, the flexural strength of the multilayer ceramic structures may be increased by up to about 200% when compared to the materials which constitute the middle layer alone. For example, advantageously, high strength bodies possessing a flexural strength of at least about 80MPa, for example at least about 100MPa, for example at least about 140MPa or at least about 150MPa, or at least about 200MPa may be obtained. Further, high strength bodies possessing a flexural strength of about 80MPa to about 150MPa or to about 200MPa, for example, about 100MPa to about 150MPa or to about 200MPa, about 115MPa to about 150MPa or to about 200MPa may be obtained. The improvements in flexural strength may be obtained without having to provide an increase or a significant increase in bulk density. For example, the bulk density of the multilayer ceramic structure may be about 2.6g/cm$^3$ or less, for example the bulk density may be about 2.1g/cm$^3$ to about 2.6g/cm$^3$, for example about 2.3g/cm$^3$. The water absorption of the ceramic multilayer structure may be equal to or less than about 3%, for example less than about 0.5%. For earthenware structures the water absorption may be greater than about 3%. The methods for measuring flexural strength, bulk density and water absorption are set out in the Examples section herein under "Test Methods".

This combination of improved properties provides for the production of thinner ceramic structures or articles without significantly compromising the strength thereof. The thickness of the multilayer ceramic structure may be about 10mm or less, for example about 5mm or less, for example about 3mm or less or about 2mm or less. The thickness of the multilayer ceramic structure may be at least 1 mm. The thickness of the multilayer ceramic structure may be about 1 mm to about 10mm, for example about 1 mm to about 5mm, for example about 1 mm to about 3mm. This means that significantly less material may be used, which, in itself provides economical and ecological advantages through the use of less raw material, lower energy consumption and reduced transport costs.

Without wishing to be bound by theory, it is believed that the increase in mechanical properties, in particular of flexural strength, of the multilayer ceramic structure is attributable to compressive stresses introduced in the two outer layers due to the difference in thermal expansion coefficients between the middle (i.e. inner) layer and the outer layers. These compressive stresses have the ability to attenuate the effect of surface flaws responsible for weakening the materials' flexural strength and to provide a stress barrier which must be overcome in order to cause the failure of the material.

## Detailed Description of the Invention

### Multilayer ceramic-forming structure

The multilayer ceramic structure is formed from a multilayer ceramic-forming structure or multilayer green structure. The multilayer ceramic-forming structure comprises or consists of three layers. The formulations of the layers when fired to form the multilayer ceramic structure provide a ceramic layer sandwiched between two outer ceramic layers wherein the two outer ceramic layers possess a lower thermal expansion coefficient (TEC) than the sandwiched middle (or inner) layer. The inner layer has a higher TEC than each of the two outer layers.

The layers in the multilayer ceramic-forming structure may comprise natural raw materials such as natural silicates, carbonates, oxides and hydrates. Suitable sources of natural silicates include one or more of kaolin, metakaolin, feldspars, nepheline syenite, lithiumspars (or lithium minerals), quartz, andalusite, kyanite, sillimanite.

Any type of clay is suitable for use in making each of the layers. For example, one or more of kaolin, ball-clay, fireclay, smectite clay, illitic clay may be present including mixtures thereof. Suitable feldspars may be selected from one or more of sodium feldspar, potassium feldspar, calcium feldspar, sodium-calcium feldspar, sodium-potassium feldspar and mixtures thereof. Suitable lithiumspars, or lithium minerals, include one or more of spodumene, petalite, lepidolite, bikitaite and mixtures thereof.

The raw materials, e.g. clay, for use in preparing the ceramic-forming layer or layers may be prepared by light comminution, e.g. grinding or milling (e.g. ball milling), of a coarse raw material, e.g. kaolin, to give suitable delamination thereof. The comminution may be carried out by use of beads or cylinders of a ceramic, e.g. alumina, grinding or milling aid. Other ceramic media, for example zirconia or silica may also be used. The coarse raw material may be refined to remove impurities and improve physical properties using well-known procedures. The ground material may be treated by a known particle size classification procedure, e.g. screening and/or centrifuging, to obtain particles having a desired $d_{50}$ value.

The material or mixture of materials for use in the multilayer ceramic-forming structure may possess a $d_{50}$ of about 1$\mu$m to about 6$\mu$m or less than 6$\mu$m. The particle size distribution of the material or materials for use in the multilayer ceramic-forming structure may be less than about 30$\mu$m, for example less than about 20$\mu$m. The material or materials for use in the multilayer ceramic-forming structure may therefore comprise no or essentially no particles possessing a particle diameter which is about 30$\mu$m or more, or, for example, no or essentially no particles possessing a particle diameter which is 20$\mu$m or more.

The median equivalent particle diameter ($d_{50}$ value) and other particle size properties referred to herein are as measured by laser light particle size analysis using a CILAS technique. The (CILAS) measurements use a particle size measurement as determined by laser light particle size analysis using a Horiba Partica laser scattering particle size distribution analyser LA-950V2. In this technique, the size of particles in powders, suspensions and emulsions may be measured using the diffraction of laser beams, based on application of the Fraunhofer theory. The term $d_{50}$ (CILAS) used herein is the value determined in this way of the particle diameter at which there are 50% by volume of the particles which have a diameter less than the $d_{50}$ value. The preferred sample formulation for measurement of particle sizes is a suspension in a liquid. Samples of the material were dispersed in water with the aid of an ultrasonic device fitted with the Horiba equipment.

Each ceramic-forming layer may comprise, consist of, or consist essentially of, components in the following ranges:

clay: from about 3 to about 60wt%, for example about 3 to about 50wt%, for example about 20 to about 50wt%, for example about 30 to about 40wt%;

feldspar: from about 10 to about 70wt%, for example about 20 to about 70wt%; lithiumspar: from 0 or about 1 to about 50wt%, for example about 10 to about 40wt%, for example about 20 to about 40wt%; (the inner layer preferably comprises 0wt% of lithiumspar);

nepheline syenite: from 0 to about 40wt%, for example about 10 to about 30wt%; wollastonite: from 0 to about 30wt%, for example about 10 to about 30wt%;

quartz: from 0 to about 50wt%, for example 0 to about 20wt%, for example about 5 to about 20wt%; or less than about 15wt%;

metakaolin: from 0 to about 50wt%, for example about 10 to about 30wt%;

andalusite: from 0 to about 30wt%, for example about 15 to about 30wt%; (the outer layers preferably comprise 0wt% of andalusite);

kyanite: from 0 to about 30wt%, for example about 15 to about 30wt%; (the outer layers preferably comprise 0wt% of kyanite);

sillimanite: from 0 to about 30wt%, for example about 15 to about 30wt%; (the outer layers preferably comprise 0wt% of sillimanite);

carbonates (for example, one or more of: lithium carbonate, sodium carbonate, potassium carbonate, calcium carbonate, magnesium carbonate, barium carbonate): from 0 to about 10wt%, for example about 0 or about 1 to about 5wt%;

oxides (for example, one or more of $Al_2O_3$, $ZrO_2$, $ZnO$, $SnO$, $B_2O_3$): from 0 to about 30wt%, for example about 0 to about 10wt%, for example about 1 to about 10wt%; (the outer layers preferably comprise 0wt% of $Al_2O_3$, $ZrO_2$);

hydrates (for example, one or more of $Al(OH)_3$, $Mg(OH)_2$, $Ca(OH)_2$): from 0 to about 30wt%, for example about 0 to about 10wt%, for example about 1 to about 5wt% (the outer layers preferably comprise 0wt% of $Al(OH)_3$).

The values of wt% described herein for the various formulations are calculated from the total weight of the dry formulation.

Accordingly, in a further aspect of the present invention there is provided a multilayer ceramic-forming structure, wherein the structure comprises an inner layer sandwiched between two outer layers and wherein each layer comprises, consists of or consists essentially of components in the following ranges:

clay: from about 3 to about 60wt%; for example about 3 to about 50wt%; for example about 20 to about 50wt%, for example about 30 to about 40wt%;

feldspar: from about 10 to about 70wt%; for example about 20 to about 70wt%; lithiumspar: from 0 or about 1 to about 50wt%; for example about 10 to about 40wt%, for example about 20 to about 40wt%; (the inner layer preferably comprises 0wt% of lithiumspar);

nepheline syenite: from 0 to about 40wt%; for example about 10 to about 30wt%; wollastonite: from 0 to about 30wt%; for example about 10 to about 30wt%;

quartz: from 0 to about 50wt%; for example 0 to about 20wt%, for example about 5 to about 20wt%; or less than about 15wt%;

metakaolin: from 0 to about 50wt%; for example about 10 to about 30wt%;

andalusite: from 0 to about 30wt%; for example about 15 to about 30wt%; (the outer layers preferably comprise 0wt% of andalusite);

kyanite: from 0 to about 30wt%; for example about 15 to about 30wt%; (the outer layers preferably comprise 0wt% of kyanite);

sillimanite: from 0 to about 30wt%; for example about 15 to about 30wt%; (the outer layers preferably comprise 0wt% of sillimanite);

carbonates (for example, one or more of: lithium carbonate, sodium carbonate, potassium carbonate, calcium carbonate, magnesium carbonate, barium carbonate): from 0 to about 10wt%; for example about 0 or about 1 to about 5wt%;

oxides (for example, one or more of $Al_2O_3$, $ZrO_2$, $ZnO$, $SnO$, $B_2O_3$): from 0 to about 30wt%; for example about 0 to about 10wt%; for example about 1 to about 10wt%; (the outer layers preferably comprise 0wt% of $Al_2O_3$, $ZrO_2$)

hydrates (for example one or more of $Al(OH)_3$, $Mg(OH)_2$, $Ca(OH)_2$): from 0 to about 30wt%; for example about 0 to about 10wt%; for example about 1 to about 5wt%; (the outer layers preferably comprise 0wt% of $Al(OH)_3$).

The layers, after firing to form a multilayer ceramic structure, provide a middle layer having a thermal expansion coefficient which is higher than each of the two outer layers.

Advantageously, the inner layer of the multilayer ceramic-forming structure and prior to formation of the multilayer ceramic structure, may comprise: about 10 to about 70wt% of one or more feldspars, for example about 20 to about 70wt%, for example about 30 to about 70wt% of one or more feldspars. The inner layer may also comprise clay.

The one or more feldspars may be sodium-potassium feldspar. The feldspar may be a mixture of feldspars, for example there may be present a mixture of different sodium-potassium feldspars or the mixture of feldspars may be selected from any combination of sodium, potassium, calcium, sodium-potassium, sodium-calcium feldspars. The amount of clay present may be about 3 to about 60wt%, for example about 3 to about 50wt%, for example about 30 to about 40wt%. Advantageously, the inner layer may comprise 0wt% lithiumspar. There may be present trace amounts of lithiumspar for example about 1wt% or less in the inner layer.

Advantageously, each of the outer layers of the multilayer ceramic-forming structure prior to formation of the multilayer ceramic structure may comprise: about 10 to about 70wt% of one or more feldspars, for example about 20 to about 70wt% of one or more feldspars. The outer layers may also comprise clay. The one or more feldspars may be a sodium-potassium feldspar, a potassium feldspar, a calcium-sodium feldspar or a sodium feldspar including mixtures thereof. The feldspar may be a mixture of feldspars or a single type of feldspar. The amount of clay present may be about 3 to about 60wt%, for example about 3 to about 50wt%, for example about 30 to about 40wt%. The outer layers may also comprise one or more lithiumspars. The amount of one or more lithiumspars may be about 0 or about 1 to about 50wt%, for example about 10 to about 40wt%, for example about 20 to about 40wt%. The one or more lithiumspars (or lithium minerals) may be selected from spodumene, petalite, lepidolite, bikitaite and mixtures thereof. Preferably the outer layers are of the same, or substantially the same composition.

Accordingly the present invention provides in a further aspect a multilayer ceramic-forming structure, wherein the structure comprises at least, or consists of, three layers, wherein said three layers comprise a middle layer sandwiched between two outer layers and wherein the inner layer comprises, or consists of, or consists essentially of: about 10 to about 70wt% of one or more feldspars, for example about 20 to about 70wt% of one or more feldspars, and about 3 to about 60wt% clay, for example about 3 to about 50wt% clay, for example about 30 to about 40wt% clay; and wherein each of the outer layers comprise, consist of, or consist essentially of: about 10 to about 70wt% of one or more feldspars, for example about 20 to about 70wt% of one or more feldspars, about 3 to about 50wt% clay, for example about 30 to about 40wt% clay, and one or more lithiumspars, for example from about 0 or about 1 to about 50wt% of one or more lithiumspars, for example about 10 to about 40wt% of one or more lithiumspars, for example about 20 or about 25 to about 40wt% of one or more lithiumspars.

After firing to form the multilayer ceramic structure the middle layer has a thermal expansion coefficient which is higher than each of the two outer layers.

Optionally, the multilayer ceramic-forming structure may further comprise combustible material. The combustible material may comprise fibrous material, for example organic fibres. Examples of suitable fibres include cellulose containing fibres, for example wood pulp.

The multilayer ceramic-forming structure may be formed by combining at least three layers. The layers may be pressed together. Suitable pressure for applying to the layers to form the multilayer structure may be at least about 5MPa, for example at least about 20MPa, for example up to about 50MPa. For example the pressure may be about 5MPa to about 50MPa, for example about 20MPa to about 50MPa, or about 25MPa to about 45MPa. Pressure may be applied in a suitable mold, for example a stainless steel mold. The pressure may be applied for at least about 5 seconds. The ratio of the thickness of the inner layer as a proportion of the overall thickness of the three layers may be about 0.4 to about 0.9, for example about 0.6. This ratio may be measured immediately following pressing and prior to firing to form the multilayer ceramic structure.

After the multilayer ceramic-forming structure has been formed it may be heated to form the multilayer ceramic structure. The multilayer ceramic-forming structure may be placed in a furnace or kiln. The furnace may be an electric furnace or a gas furnace. The kiln may be an electric kiln or a gas kiln. The furnace or kiln may be heated by any suitable type of fuel. The atmosphere in the kiln or furnace may be air. The atmosphere in the kiln may be a reducing atmosphere or a neutral atmosphere or an oxidizing atmosphere. For example, when the atmosphere is air, the conditions may be adjusted to provide variable degrees of reducing or oxidizing conditions. The temperature increase in the furnace or kiln may be about 1°C/min to about 50°C/min from room temperature up to the soaking temperature. The soaking temperature may be about 1000°C to about 1400°C. The structure may be retained in the kiln or furnace for a suitable period of time in a thermal cycle of for example about 30 minutes to about 24 hours. Following firing, the multilayer ceramic structure may be cooled until the multilayer structure reaches room temperature. The structure may be free cooled, i.e. allowed to cool without additional cooling means.

Advantageously the outer layers may be densified during the same thermal cycle as densification of the middle layer occurs. Alternatively, the outer layers may partially crystallize towards the end of firing, after the porosity has been reduced or eliminated. The crystalline phases in the outer layers may comprise lithium and magnesium containing crystals, suitable examples include petalite and spodumene, (for example β-spodumene). The crystalline phases may also comprise quartz relicts and mullite. The formation of crystalline phases during firing may reduce the amount of deformation.

Multilayer ceramic structure

The multilayer ceramic structure in accordance with the invention comprises or consists of three layers, wherein said three layers comprise or consist of a ceramic layer possessing a higher thermal expansion coefficient (TEC) sandwiched between two outer ceramic layers wherein each of the two outer ceramic layers possess a lower thermal expansion coefficient than the sandwiched middle layer. Typically, the thermal expansion coefficient of the two outer layers is the same. By having the same value of TEC for each of the two outer layers, the present inventors have found that the multilayer ceramic structure does not deform during cooling after formation from the multilayer ceramic-forming structure. This arrangement provides a structure which possesses better mechanical properties when compared to each layer individually. The thermal expansion coefficient is measured in accordance with the well known dilatometric method, in which fired samples are heated, at a defined heating rate, inside a dilatometric furnace and the length is measured during the full period of the heat treatment. While the samples length is measured, a thermocouple positioned as close as possible to (but without touching) the sample simultaneously measures the temperature. The dilatation of the sample is determined as a function of the temperature and the thermal expansion coefficient can be calculated in the desired temperature range. The thermal expansion coefficient of each layer of the fired structure is individually measured in a *Netzsch Dil 402 CD* dilatometer using bars of dimensions 40mm x 4mm x 4mm (length x breadth x thickness) in a normal atmosphere (air) without gas flow, between 25°C and 800°C at a heating rate of 5°C/min.

The final product formed from the multilayer ceramic-forming structure may be a multilayer vitreous, semivitreous or crystalline structure. The layers of the multilayer ceramic structure may comprise crystals embedded in a vitreous matrix. The layers may be partially crystalline or substantially fully crystalline, for example up to about 98wt% crystalline. The vitreous phase of the layers may crystallise at the end of the firing process and may form partially crystalline or substantially fully crystalline layers. The degree of crystallinity and type of crystalline phases of the inner layer when compared with the outer layers may be the same (or substantially the same) or may be different. In order to increase the mechanical properties and the TEC of the inner layer one or more crystalline phases may be introduced into the inner layer. The crystalline phase or phases may be introduced via the use of suitable insoluble natural raw materials such as andalusite including its polymorphs kyanite and sillimanite.

The middle or inner layer of the multilayer ceramic-forming structure is designed to provide after firing a layer possessing a higher thermal expansion coefficient (TEC) than each of the two outer layers between which it is sandwiched. For example, the TEC of the inner layer may be about $3.0x10^{-6}K^{-1}$ to about $9.0x10^{-6}K^{-1}$, for example about $6.0x10^{-6}K^{-1}$ to about $9.0x10^{-6}K^{-1}$.

For example, the TEC of each of the outer layers may be about $1.0x10^{-6}K^{-1}$ to about $8.0x10^{-6}K^{-1}$ for example about $3.0x10^{-6}K^{-1}$ to about $8.0x10^{-6}K^{-1}$. The outer layer formulations of the multilayer ceramic structure formed after firing each possess a lower thermal expansion coefficient when compared to the inner layer. Advantageously, both of the outer layers have the same thermal expansion coefficient.

The water absorption of the multilayer ceramic structure may be less than about 3%, for example less than about 0.5% or less than about 0.1%. For example, the water absorption may be about 0.1 % to less than or about 3%.

Following firing of the multilayer ceramic-forming structure to form the multilayer ceramic structure the phases present in the layers may be, independently selected for each layer, from one or more, and any combination of, quartz, mullite, feldspar, LAS (lithium-aluminium-silicate), spodumene (for example β-spodumene), petalite.

The multilayer ceramic structure may comprise up to about 98wt%, for example up to about 90wt% of crystalline phase. The structure may comprise at least about 10wt% crystalline phase, for example at least about 20wt% or at least about 30wt% or at least about 40wt% or at least about 50wt% or at least about 60wt% crystalline phase. For example, the structure may comprise about 10wt% to about 90wt% or to about 98wt% crystalline phase, for example about 20wt% to about 90wt%, for example about 20wt% to about 80wt% or about 20wt% to about 70wt% crystalline phase.

The multilayer ceramic structure may also comprise a vitreous phase, for example up to about 90wt% of vitreous phase, for example about 50wt% to about 90wt%.

The inner layer of the fired ceramic multilayer structure may consist of, consist essentially of or comprise the following:

quartz: up to about 40wt%, for example about 2wt% to about 40wt%; less than about 30 wt%, for example less than about 20wt%;
mullite: up to about 40wt%, for example about 2wt% to about 40wt%; 0wt% or about 2wt% to about 20wt%;
andalusite: up to about 30wt%; for example about 20wt% to about 30wt%;
kyanite: up to about 30wt%; for example about 20wt% to about 30wt%;
sillimanite: up to about 30wt%; for example about 20wt% to about 30wt%.

The amount of feldspar present in the inner layer may be 0wt%, or for example less than about 2wt%.
The amount of nepheline syenite present in the inner layer may be 0wt%, or for example less than about 2wt%.

The amount of wollastonite present in the inner layer may be 0wt%, or for example less than about 2wt%.

The amount of andalusite present in each of the outer layers may be 0wt%.

The amount of kyanite present in each of the outer layers may be 0wt%.

The amount of sillimanite present in each of the outer layers may be 0wt%

The inner layer may also comprise a vitreous phase, for example up to about 90wt% of vitreous phase, for example about 50wt% to about 80wt%. The amount of vitreous phase may be about 2wt% or greater than about 2wt%. The amount of vitreous phase may be about 2wt% to about 90wt%.

The inner layer may comprise up to about 90wt%, for example up to about 98wt% of crystalline phase. The inner layer may comprise at least about 10wt% crystalline phase, for example at least about 20wt% or at least about 30wt% or at least about 40wt% or at least about 50wt% or at least about 60wt% crystalline phase. For example, the inner layer may comprise about 10wt% to about 90wt% or to about 98wt% crystalline phase, for example about 20wt% to about 90wt% or to about 98wt%, for example about 20wt% to about 80wt% or about 20wt% to about 70wt% crystalline phase.

Each of the outer layers may consist of, consist essentially of or comprise the following:

quartz: up to about 40wt%, for example about 2wt% to about 40wt%; less than about 30 wt%, for example less than about 20wt%;

mullite: up to about 40wt%, for example about 2wt% to about 40wt%; 0wt% or about 2wt% to about 20wt%;

LAS: up to about 30wt%, for example up to about 20wt%; 0wt% or about 5wt% to about 20wt% or to about 30wt%;

spodumene: up to about 30wt%, for example 0 or about 5wt% to about 20wt% (the spodumene may be β-spodumene).

The amount of feldspar present in each of the outer layers may be 0wt%, or for example less than about 2wt%.

The amount of nepheline syenite present in each of the outer layers may be 0wt%, or for example less than about 2wt%.

The amount of wollastonite present in each of outer layers may be 0wt%, or for example less than about 2wt%.

The amount of andalusite present in each of the outer layers may be 0wt%.

The amount of kyanite present in each of the outer layers may be 0wt%.

The amount of sillimanite present in each of outer layers may be 0wt%.

The amount of petalite present in each of the outer layers may be 0wt%, or for example less than about 2wt%.

Each of the outer layers may also comprise a vitreous phase, for example up to about 90wt% of vitreous phase, for example about 60wt% to about 90wt%. The amount of vitreous phase in each of the outer layers may be about 2wt% or greater than about 2wt%. The amount of vitreous phase may be about 2wt% to about 90wt%.

Each of the outer layers may comprise up to about 90wt% for example up to about 98wt% of crystalline phase. Each of the outer layers may comprise at least about 10wt% crystalline phase, for example at least about 20wt%, or at least about 30wt%, or at least about 40wt%, or at least about 50wt%, or at least about 60wt% crystalline phase. For example, each of the outer layers may comprise about 10wt% to about 90wt% or to about 98wt% crystalline phase, for example about 20wt% to about 90wt% or to about 98wt%, for example about 20wt% to about 80wt% or 20wt% to about 70wt% crystalline phase.

The quantification of the crystalline phases of each fired layer is carried out using the software *DIFFRAC<sup>PLUS</sup> Topas 4.2 - Bruker AXS GmbH.* This calculates the amount of the phases through the analysis of the XRD diffractograms using the Rietveld Method.

The multilayer ceramic structure may be glazed or unglazed.

## Brief Description of the Drawings

Embodiments of the invention will now be described by way of example only and without limitation, with reference to the accompanying drawings and the following Examples, in which:

Figure 1 is an x-ray diffractogram of Sample A following firing showing the crystalline phases present;

Figure 2 is an x-ray diffractogram of Sample B following firing showing the crystalline phases present;

Figure 3 is an x-ray diffractogram of Samples C, D and E following firing showing the crystalline phases present;

Figure 4 is an x-ray diffractogram of Sample F following firing showing the crystalline phases present.

**Examples**

**Test Methods**

*Thermal Expansion Coefficient*

The thermal expansion coefficient was measured in accordance with the well known dilatometric method, in which fired samples were heated at a heating rate of 5°C/min inside a dilatometric furnace. The thermal expansion coefficient of each layer of the fired structure was individually measured in a *Netzsch Dil 402 CD* dilatometer using bars of dimensions 40mm x 4mm x 4mm (length x breadth x thickness) in a normal atmosphere (air) without gas flow. The length was monitored during the full period of the heat treatment. While the samples length is measured, a thermocouple positioned as close as possible to (but without touching) the sample simultaneously measured the temperature. The dilatation of the sample was determined as a function of the temperature and the thermal expansion coefficient was calculated between 25°C and 800°C.

*Flexural (Bending) strength*

Five fired rectangular samples of the multilayer ceramic structure having dimensions of 100mm (length) x 20mm (width) x 5mm (thickness) had their flexural strength measured through a three-point bending test using a *Zwick Roell Z030.* The support span (L) was 50mm and the loading rate applied was 0.5mm/min. After breaking, the width and the thickness of the specimens were measured as close as possible to the breaking point. These values, together with the break force and the support span were used to calculate the bending strength.

*Water absorption (WA)*

Samples weighing about 10g were dried in an oven until the weight was constant. The samples were allowed to cool in a desiccator and then weighed ($W_d$). The samples were put in a chamber under vacuum for 20 minutes, following which the chamber was filled with water at 20°C to cover the samples which were then left submersed for 2 hours. The excess water was carefully dried off and the samples were immediately weighed ($W_h$). The water absorption was calculated as a function of the specimen's weight difference prior to ($W_d$) and after ($W_h$) water submersion.

$$WA = \frac{W_h - W_d}{W_d} \times 100$$

*Bulk Density (BD)*

The bulk density was measured using the well known Archimedes Method. Samples weighing about 10g were dried in an oven until the mass was constant. The samples were allowed to cool in a desiccator and then weighed ($W_d$).The samples were put in a chamber under vacuum for 20 minutes. Afterwards, the chamber was filled with water at 20°C to cover the samples which were then left submersed for 2 hours. The samples were weighed while immersed in water ($W_i$). Afterwards, the excess water was carefully dried off and the samples were immediately weighed ($W_h$). The values of dried weight ($W_d$), immersed weight ($W_i$), humid weight ($W_h$) and the water density ($d_w$) at the measurement temperature were used in order to calculate the bulk density.

$$BD = \frac{W_d \times d_w}{W_h - W_i}$$

*Open Porosity (OP)*

The open porosity was measured using the well known Archimedes Method. Samples weighing about 10g were dried in an oven until the mass was constant. The samples were allowed to cool in a desiccator and then weighed ($W_d$). The samples were then put in a chamber under vacuum for 20 minutes, after which the chamber was filled with water at 20°C to cover the samples which were left submersed for 2 hours. The samples were weighed while immersed in water ($W_i$). The samples were removed and the excess water was carefully dried off and the samples were immediately weighed ($W_h$). The values of dried weight ($W_d$), immersed weight ($W_i$) and humid weight ($W_h$) were used to calculate the open porosity.

$$OP = \frac{W_h - W_d}{W_h - W_i} \times 100$$

Materials

F1 is a Na-feldspar which comprises quartz and albite. F2 is a NaK-feldspar comprising quartz, albite, microcline and muscovite. F3 is a NaK-feldspar comprising quartz, albite and microcline. L1 is a lithiumspar comprising quartz, petalite and bikitaite. L2 is a lithiumspar comprising quartz and spodumene. C is a clay comprising quartz, illite and kaolinite. Analysis of the materials was carried out according to the Rietveld method and the amounts of crystal phase are provided in Table 1a.

**Table 1a**

| Material | Quartz (wt%) | Albite (wt%) | Microcline (wt%) | Muscovite (wt%) | Petalite (wt%) | Bikitaite (wt%) | Spodumene (wt%) | Kaolinite (wt%) | Illite (wt%) |
|---|---|---|---|---|---|---|---|---|---|
| F1 | 11 | 89 | | | | | | | |
| F2 | 36 | 34 | 14 | 16 | | | | | |
| F3 | 14 | 60 | 26 | | | | | | |
| L1 | 12 | | | | 79 | 9 | | | |
| L2 | 2 | | | | | | 98 | | |
| C | 33 | | | | | | | 42 | 25 |

Example 1

Ceramic layers (Samples A-F) possessing the stated thermal expansion coefficients (following firing) were formed in accordance with Table 1b. The mixtures of raw materials were wet milled in a ball mill in order to obtain a fine powdered mixture having a particle size distribution less than 30$\mu$m and a median particle size ($d_{50}$) < 6$\mu$m. The slurry was sieved through a 63$\mu$m sieve, dried and disagglomerated manually in a mortar. The samples were fired in a kiln at the same thermal cycle using a heating rate of 40°C/min from room temperature up to a soaking temperature of 1120°C. The samples were maintained for 5 minutes at 1120°C and then they were allowed to cool (free cooling) inside the kiln until they reached room temperature.

**Table 1b**

| Sample | F1/wt% | F2/wt% | F3/wt% | L1/wt% | L2/wt% | Clay/wt% | TEC (x10$^{-6}$ K$^{-1}$) |
|--------|--------|--------|--------|--------|--------|----------|---------------------------|
| A | 0 | 30 | 40 | 0 | 0 | 30 | 8.0 |
| B | 30 | 0 | 40 | 0 | 0 | 30 | 7.9 |
| C | 0 | 21 | 0 | 39 | 0 | 40 | 6.5 |
| D | 0 | 27 | 0 | 33 | 0 | 40 | 7.1 |
| E | 0 | 33 | 0 | 27 | 0 | 40 | 7.2 |
| F | 0 | 27 | 0 | 0 | 33 | 40 | 5.7 |

A number of multilayer compositions were formed with A as the middle layer and the lower TEC samples as the outer layers. The samples were pressed in a stainless steel mold at a pressure of 45MPa. The ratio between the internal thickness (D2), i.e. the thickness of the middle layer and the total thickness (D) of the sample was 0.6 following pressing. Following firing, five multilayer samples possessing dimensions of 100x20x5 mm (length, breadth, thickness) had their flexural strength measured using a three point bending test using a Zwick Roell Z030 apparatus. The results along with the bulk density and water absorption measurements are presented in Table 2.

**Table 2**

| Multilayer Structure | Flexural Strength (MPa)* | Bulk Density (g/cm$^3$) | Water absorption (%) |
|----------------------|-------------------------|-------------------------|----------------------|
| A | 64 | 2.35 | 0.08 |
| B-A-B | 95 (3.70) | 2.36 | 0.09 |
| C-A-C | 118 (10.58) | 2.30 | 0.13 |
| D-A-D | 103 (7.66) | 2.30 | 0.11 |
| E-A-E | 112(2.74) | 2.32 | 0.15 |
| F-A-F | 144 (4.77) | 2.32 | 0.17 |
| * standard deviation in brackets | | | |

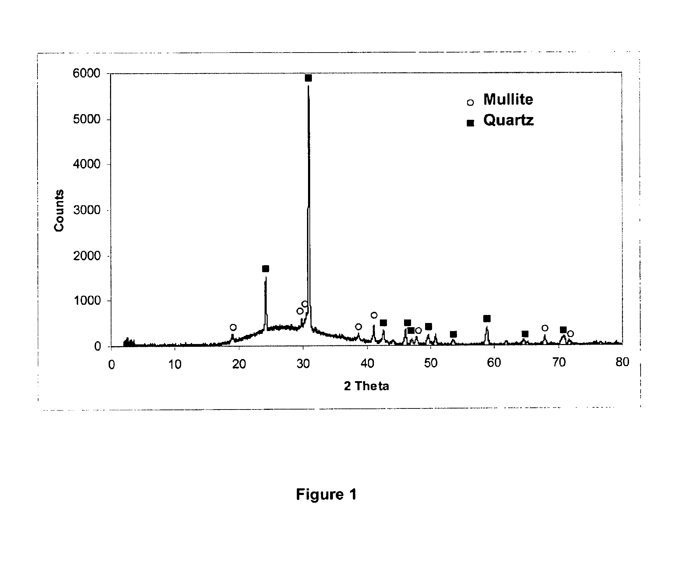

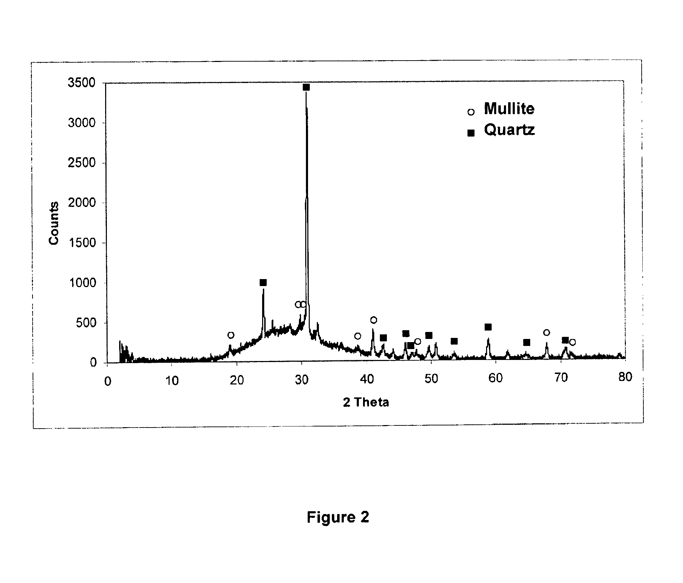

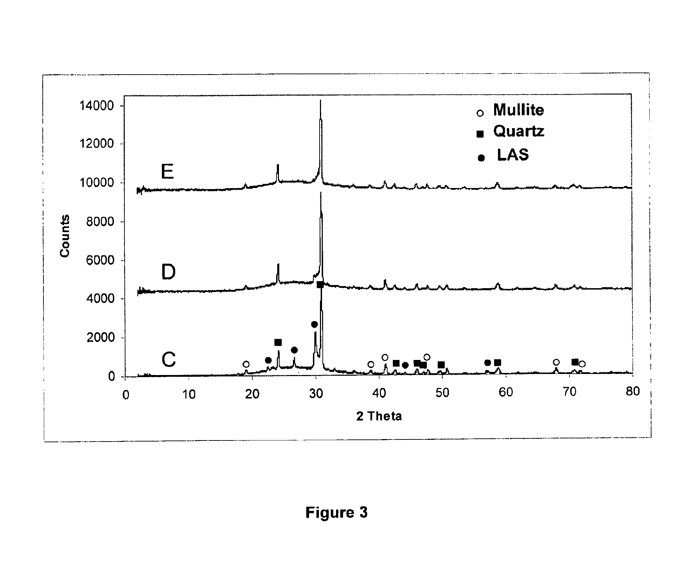

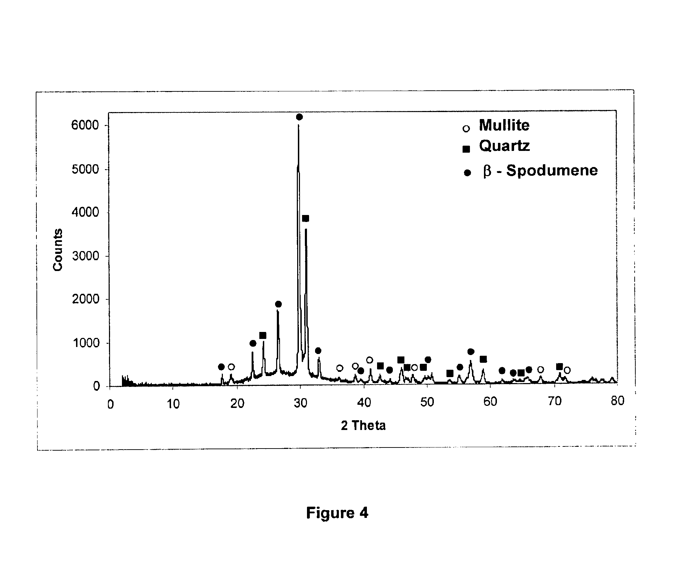

X-ray diffractograms of the fired samples were obtained and are illustrated in Figures 1 to 4. The fired samples A and B comprise the crystalline phases quartz, mullite and a proportion of vitreous phase. The X-ray diffractogram of the fired sample C shows the presence of the crystalline phases quartz, mullite and lithium-aluminosilicate (LAS) and an amount of vitreous phase. The X-ray diffractograms of the fired samples D and E show the presence of the crystalline phases quartz, mullite and an amount of vitreous phase. Fired sample F possesses the crystal phases $\beta$-spodumene, quartz, mullite and a vitreous phase. The phases present in the fired samples A to F are set out in Table 3.

**Table 3**

| Sample | Quartz (wt%) | Mullite (wt%) | LAS (wt%) | β-Spodumene (wt%) | Vitreous phase (wt%) |
|--------|--------------|---------------|-----------|-------------------|----------------------|
| A | 19 | 4 | | | 77 |
| B | 12 | 2 | | | 86 |
| C | 16 | 6 | 9 | | 69 |

(continued)

| Sample | Quartz (wt%) | Mullite (wt%) | LAS (wt%) | β-Spodumene (wt%) | Vitreous phase (wt%) |
|--------|--------------|---------------|-----------|-------------------|----------------------|
| D | 18 | 12 | | | 70 |
| E | 17 | 10 | | | 73 |
| F | 14 | 5 | | 16 | 65 |

**Claims**

1. A multilayer ceramic structure, wherein the structure comprises, or consists of, three layers, wherein said three layers comprise, or consist of, a middle layer sandwiched between two outer layers and said middle layer has a thermal expansion coefficient which is higher than each of the two outer layers.

2. A multilayer ceramic structure according to claim 1, wherein the two outer layers have the same thermal expansion coefficient.

3. A multilayer ceramic structure according to claim 1 or 2, wherein the three layers are ceramic whiteware layers.

4. A multilayer ceramic structure according to any one of claims 1 to 3, wherein the three layers are selected from ceramic porcelain, ceramic china, ceramic earthenware and ceramic stoneware layers.

5. A multilayer ceramic structure according to any one of claims 1 to 4, wherein each of the three layers are ceramic porcelain layers.

6. A multilayer ceramic structure according to any one of claims 1 to 5, wherein the multilayer ceramic structure may comprise up to about 98wt% of crystalline phase, for example up to about 90wt% of crystalline phase, for example at least about 10wt% crystalline phase, for example at least about 20wt% or at least about 30wt% or at least about 40wt% or at least about 50wt% or at least about 60wt% crystalline phase, for example, at least about 10wt% to about 90wt% or to about 98wt% crystalline phase, for example at least about 20wt% to about 90wt% or to about 98wt% crystalline phase, for example at least about 20wt% to about 80wt% or at least about 20wt% to about 70wt% crystalline phase.

7. A multilayer ceramic structure according to any one claims 1 to 6, wherein the layers comprise, consist of, or consist essentially of one or more, and any combination of the crystalline phases, quartz, mullite, feldspar, LAS, spodumene (for example β-spodumene), petalite.

8. A multilayer ceramic structure according to any one of claims 1 to 7, wherein the inner layer comprises more than one crystalline phase and said more than one crystalline phase consists or consists essentially of quartz and mullite and each of the outer layers also comprise more than one crystalline phase and said more than one crystalline phase in each of the outer layers consists or consists essentially of quartz, mullite and a crystalline phase comprising lithium, for example LAS and/or spodumene.

9. A multilayer ceramic structure according to any one of claims 1 to 8, wherein the multilayer ceramic structure comprises a vitreous phase.

10. A multilayer ceramic structure according to any one of claims 1 to 9, wherein the structure is selected from the following: a tile, for example a floor tile or wall tile, tableware, sanitary ware, artware, an artificial slate.

11. A multilayer ceramic structure according to any one of claims 1 to 10, wherein the thickness of the structure is about 1 mm to about 10mm, for example about 1 mm to about 5mm, for example about 1 mm to about 3mm.

12. A multilayer ceramic structure according to any one of claims 1 to 11, wherein the bulk density of the structure is about $2.1g/cm^3$ to about $2.6g/cm^3$.

13. A multilayer ceramic structure according to any one of claims 1 to 12, wherein the water absorption of the structure is about 0.1 % to about 3% or less.

**14.** A multilayer ceramic structure according to any of claims 1 to 13 wherein the flexural strength of the structure is at least about 80MPa, for example at least about 100MPa, for example at least about 150MPa, for example about 80MPa or about 100MPa to about 200MPa or to about 150MPa.

**15.** A multilayer ceramic-forming structure comprising a middle ceramic-forming layer sandwiched between two outer ceramic-forming layers for forming the multilayer ceramic structure according to any one of claims 1 to 14.

**16.** A multilayer ceramic-forming structure according to claim 15, wherein each layer comprises, consists of or consists essentially of components in the following ranges:

clay: from about 3 to about 60wt%; for example about 3 to about 50wt%; for example about 20 to about 50wt%, for example about 30 to about 40wt%;
feldspar: from about 10 to about 70wt%; for example about 20 to about 70wt%;
lithiumspar: from 0 to about 50wt%; for example about 10 to about 40wt%, for example about 20 to about 40wt%;
nepheline syenite: from 0 to about 40wt%; for example about 10 to about 30wt%;
wollastonite: from 0 to about 30wt%; for example about 10 to about 30wt%;
quartz: from 0 to about 50wt%; for example about 5 to about 20wt%;
metakaolin: from 0 to about 50wt%; for example about 10 to about 30wt%;
andalusite: from 0 to about 30wt%; for example about 15 to about 30wt%;
kyanite: from 0 to about 30wt%; for example about 15 to about 30wt%;
sillimanite: from 0 to about 30wt%; for example about 15 to about 30wt%;
carbonates (for example, one or more of: lithium carbonate, sodium carbonate, potassium carbonate, calcium carbonate, magnesium carbonate, barium carbonate): from 0 to about 10wt%; for example about 0 or about 1 to about 5wt%;
oxides (for example, one or more of $Al_2O_3$, $ZrO_2$, $ZnO$, $SnO$, $B_2O_3$): from 0 to about 30wt%; for example about 1 to about 10wt%;
hydrates (for example one or more of $Al(OH)_3$, $Mg(OH)_2$, $Ca(OH)_2$): from 0 to about 30wt%; for example about 1 to about 5wt%.

**17.** A multilayer ceramic-forming structure according to claim 15 or 16, wherein the inner layer comprises, or consists of, or consists essentially of about 10 to about 70wt% of one or more feldspars, about 3 to about 60wt% or about 3 to about 50wt% clay.

**18.** A multilayer ceramic-forming structure according to any one of claims 15 to 17, wherein the outer layers comprise, consist of, or consist essentially of about 10 to about 70wt% of one or more feldspars, about 3 to about 60wt% or about 3 to about 50wt% clay, about 0 to about 50wt% of one or more lithiumspars, for example about 20 to about 45wt% of one or more lithiumspars.

**19.** A multilayer ceramic-forming structure according to any one of claims 16 to 18, wherein the clay is selected from one or more of kaolin, ball-clay, fireclay, smectite clay, illitic clay.

**20.** A multilayer ceramic-forming structure according to any one of claims 16 to 19, wherein the feldspar is selected from one or more of sodium feldspar, potassium feldspar, calcium feldspar, sodium-calcium feldspar, sodium-potassium feldspar.

**21.** A multilayer ceramic-forming structure according to any one of claims 16 to 20, wherein the lithiumspar is selected from one or more of spodumene, petalite, lepidolite, bikitaite.

**22.** A multilayer ceramic-forming structure according to any one of claims 15 to 21, wherein the structure further comprises organic and/or inorganic fibres, for example the organic fibres may be combustible.

**23.** A method of making a multilayer ceramic-forming structure according to any one of claims 15 to 22, comprising sandwiching a ceramic-forming layer between two ceramic-forming layers to form a three layer structure comprising or consisting of inner and outer ceramic-forming layers;
applying pressure to said three layer structure;
wherein if fired to form a multilayer ceramic structure, the inner layer of said multilayer ceramic structure would have a thermal expansion coefficient which is higher than each of the two outer layers of said multilayer ceramic structure.

**24.** A method according to claim 23, wherein the ceramic-forming structure is fired to form a multilayer ceramic structure.

**25.** A method according to claim 24, wherein prior to firing, the multilayer ceramic-forming structure is dried and shaped.

**26.** A method according to any one of claims 23 to 25, wherein any combustible material present, for example organic fibres, is burned off during firing to form the multilayer ceramic structure.

Figure 1

Figure 2

**Figure 3**

**Figure 4**

Europäisches
Patentamt
European
Patent Office
Office européen
des brevets

# EUROPEAN SEARCH REPORT

Application Number

EP 10 29 0617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 0 757 974 A1 (TORAY INDUSTRIES [JP])<br>12 February 1997 (1997-02-12)<br><br>* page 8, lines 22-27 *<br>* examples 2,3, comp. 1,6 *<br>* claims 1,2,4,6,13-17,20,23 *<br>* page 3, line 37 - line 40 *<br>* table 1 *<br>* page 11 * | 1-7,<br>9-20,<br>22-26<br>8,21 | INV.<br>C04B33/24<br>B32B18/00 |
| X | CN 1 149 283 A (TORAY INDUSTRIES [JP])<br>7 May 1997 (1997-05-07)<br>* the whole document *<br>* an automatic computer translation has been consulted * | 1-26 | |
| Y | WO 2010/016598 A1 (NIKKO COMPANY [JP];<br>MOHRI MAMORU [JP]; KIDANI NAOKI [JP])<br>11 February 2010 (2010-02-11)<br>* page 14, line 11 - page 17, line 11 * | 8,21 | |
| A | GB 1 575 677 A (GAIL TONWERKE WILHELM)<br>24 September 1980 (1980-09-24)<br>* the whole document * | 1-26 | TECHNICAL FIELDS SEARCHED (IPC)<br><br>C04B<br>B32B |

The present search report has been drawn up for all claims

| Place of search | Date of completion of the search | Examiner |
|---|---|---|
| The Hague | 17 March 2011 | Sow, Eve |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 29 0617

This annex lists the patent family members relating to the patent documents cited in  the above-mentioned European search report.
The members are as contained in the European Patent Office EDP file on
The European Patent Office is in no way liable for these particulars which are merely given for the purpose of information.

17-03-2011

| Patent document cited in search report | | | Publication date | Patent family member(s) | | | Publication date |
|---|---|---|---|---|---|---|---|
| EP 0757974 | A1 | | 12-02-1997 | WO | 9626909 | A1 | 06-09-1996 |
| CN 1149283 | A | | 07-05-1997 | NONE | | | |
| WO 2010016598 | A1 | | 11-02-2010 | JP | 2010037165 | A | 18-02-2010 |
| GB 1575677 | A | | 24-09-1980 | AR | 214748 | A1 | 31-07-1979 |
| | | | | BR | 7705838 | A | 02-05-1978 |
| | | | | CA | 1112145 | A1 | 10-11-1981 |
| | | | | CH | 626314 | A5 | 13-11-1981 |
| | | | | DE | 2639522 | B1 | 07-07-1977 |
| | | | | ES | 461752 | A1 | 16-05-1978 |
| | | | | FR | 2363435 | A1 | 31-03-1978 |
| | | | | IT | 1085411 | B | 28-05-1985 |
| | | | | NL | 7709586 | A | 06-03-1978 |
| | | | | ZA | 7705131 | A | 26-07-1978 |

EPO FORM P0459

For more details about this annex : see Official Journal of the European Patent Office, No. 12/82